# EUROPÄISCHE PATENTANMELDUNG

(11) **EP 0 643 235 A1**
(43) Veröffentlichungstag der Anmeldung: **15.03.1995**
(21) Anmeldenummer: 94114151.7
(22) Anmeldetag: 08.09.1994
(51) Int. Cl.: F16D 7/06

(54) **Mechanischer Überlastschutz für Maschinen, insbesondere für Backenbrecher**

(30) Priorität: 09.09.1993 DE 9313663 U
(71) Anmelder: Böhringer, Paul, D-74229 Oedheim (DE)
(72) Erfinder: Götz, Bruno, D-74229 Oedheim (DE)
(74) Vertreter: Patentanwälte Leinweber & Zimmermann

(57) **Zusammenfassung**

Die Erfindung betrifft einen zerstörungsfreien und wieder einrückbaren Überlastschutz für blockierungsgefährdete Arbeitsmaschinen, wie Doppelkniehebelbrecher oder Einschwingenbrecher in Form einer Kupplung, bei der zwei Kupplungsteile (16,18) über Kupplungskörper (30) bis zu einem Grenzkraftschluß relativ zueinander fixiert sind, während bei Überschreiten des Grenzkraftschlusses die Fixierung aufgehoben und die Kupplung ausgerückt wird. Die Kupplungskörper sind zweckmäßig Wälzkörper und können die Gestalt von Kugeln haben.

## Beschreibung

Die Erfindung betrifft eine mechanische Überlastschutzvorrichtung für Maschinen mit einem Antriebsmotor, einer von diesem angetriebenen Arbeitsmaschine, und einer in den Antriebsstrang eingeschalteten Überlastungssicherung, die bei Überlastung der Arbeitsmaschine den Antriebsstrang zum Antriebsmotor unterbricht.

Zahlreiche Maschinen müssen mit Sicherungen gegen Überlastungen ausgerüstet sein, damit sie beim Auftreten von Störfällen im Betrieb nicht zerstört werden. So werden z.B. bei Elektromotoren Überlast-Schalteinrichtungen installiert, die bei zu hoher Stromaufnahme den Elektromotor von der Energiezufuhr abtrennen. Bei Förderern sind Flüssigkeitskupplungen üblich, in deren Gehäuse Schmelzsicherungen eingebaut sind. Dadurch wird erreicht, daß bei unzulässiger Erwärmung der Kupplungsflüssigkeit die Sicherung schmilzt, so daß die Flüssigkeit ausläuft und kein Drehmoment mehr übertragen werden kann. Bei mechanischer Kraftübertragung werden die Kupplungen auch mit sogenannten "Scherbolzen" versehen, die beim Überschreiten des zulässigen Drehmoments zerstört werden. Auch sind federvorgespannte Klauen oder Zahnkupplungen bekannt, die die Übertragung eines zu großen Drehmoments durch das axiale Zurückweichen der ineinandergreifenden Verzahnung unterbrechen, jedoch ein ungestörtes Auslaufen der Schwungmassen verhindern.

Bei Doppelkniehebel-Backenbrechern werden hierfür Druckplatten eingesetzt. Diese weisen eine definierte Schwachstelle auf, an der bei einer Blockade des Brechers die Druckplatte zerstört wird.

Der thermische Überlastschutz (Überlastschalteinrichtungen, Schmelzsicherung) hat den Nachteil, daß er sehr träge ist. Er kann deshalb bei einer plötzlichen Blockade der Arbeitsmaschine deren Beschädigung nicht vermeiden. Völlig unwirksam ist überdies der thermische Überlastschutz bei Arbeitsmaschinen mit großen Schwungmassen.

Die Klauenkupplung hat bekanntermaßen den Vorteil, daß zwei gegeneinander verzahnte Kupplungsteile mittels Feder kraftschlüssig verbunden werden und im Überlastfalle bei einem definierten Übertragungsmoment schnell die beiden Antriebsstränge trennt, ein störungsfreies Auslaufen jedoch nicht möglich ist, da durch die konstruktive Ausführung die Kupplung sofort wieder einrastet und erneut getrennt wird; dies ist der sogenannte "Rattereffekt".

Demgegenüber wirkt der bekannte mechanische Überlastschutz (Scherbolzen, Druckplatten) sehr schnell und trennt auch bei Vorhandensein großer Schwungmassen die Arbeitsmaschine so rasch vom Antrieb, daß Schäden nicht auftreten. In Kauf genommen werden muß dabei aber eine mechanische Zerstörung des Überlastschutzes an der hierfür vorgesehenen Stelle. Das mechanisch zerstörte Teil muß ersetzt werden, so daß die Maschine oft erst nach langwierigen Arbeiten wieder in Betrieb genommen werden kann.

Aufgabe der Erfindung ist es deshalb, eine Überlastschutzvorrichtung vorzuschlagen, die nach Art der bisher bekannten mechanischen Überlastschutzvorrichtungen überaus rasch anspricht, dabei aber zerstörungsfrei und wiedereinrückbar ausgebildet sein soll. Die Maschine soll während der Überlast dauerhaft und reaktionsfrei von dem Antrieb getrennt sein bis zum Stillstand des Antriebes und der Schwungmassen.

Diese Aufgabe wird bei der eingangs geschilderten Konzeption dadurch gelöst, daß die Überlastsicherung eine Kupplung aus einem antreibenden und einem abtreibenden Kupplungsteil ist, daß die Kupplungsteile relativ zueinander drehbar und durch eine Anzahl von Kupplungskörpern miteinander kraftschlüssig gekuppelt sind, und daß die Kupplungskörper unter einer die Gesamtkraft des Kraftschlusses bestimmenden Federkraft in Kupplungsstellung gehalten und bei Überschreiten der Grenzkraft (z.B. bei Blockieren des abtreibenden Kupplungsteils) in eine den Kraftschluß aufhebende Ausrückstellung überführbar sind.

Man erkennt, daß hier der Überlastschutz ähnlich wie bei den bisherigen mechanischen Überlastschutzvorrichtungen eine höchstmögliche Absicherung der Arbeitsmaschine gegen Beschädigung bei Bewegungsblockierungen dadurch bietet, daß ein schnelles Auslösen und ein völlständiges Abtrennen der Arbeitsmaschine vom Antriebsstrang erreicht ist. Dies geschieht aber zerstörungsfrei und auf einfache Weise wiedereinrückbar. Denn der Überlastschutz ist im Prinzip eine starre Kupplung. Starr ist diese Kupplung bis zu einer wählbaren Grenzkraft des Kraftschlusses dadurch, daß die beiden relativ zueinander drehbaren Kupplungsteile durch Kupplungskörper kraftschlüssig miteinander verbunden sind. Wird aber die Grenzkraft des Kraftschlusses (beispielsweise bei einem Blockieren der Arbeitsmaschine) überschritten, dann werden die Kupplungskörper bewegt und überführen die starre Kupplung in eine Ausrückstellung. In dieser kann die blockierte Arbeitsmaschine stillstehen und der Antrieb unbeschädigt weiterlaufen.

Erfindungsgemäß sind als Kupplungskörper beispielsweise drei in gleichen Winkelabständen um die Achse verteilte Kupplungskörper in Form von Wälzkörpern vorgesehen. Bei diesen handelt es sich in einem besonders einfachen Fall um Kugeln. Die Kupplungskörper, also beispielsweise die Kugeln, können in Senkungen der einander zugekehrten Flächen des antreibenden und des abtreibenden Kupplungsteils aufgenommen werden und so im Normalfall (Überlastschutzvorrichtung in Bereitschaft, aber nicht wirksam) die starre Verbindung der beiden Kupplungsteile und damit die Kraftübertragung sicherstellen. Wird aber der Grenzkraftschluß überschritten, dann verlassen die Wälzkörper ihre Senkungen und geben die Relativdrehung der beiden Kupplungsteile gegeneinander frei.

Hierfür ist es besonders zweckmäßig, wenn an die beschriebenen Senkungen Führungsbahnen für die Kupplungskörper anschließen. Bei diesen Führungsbahnen kann es sich um in die Kupplungsteile eingefräste Führungsrillen für die Wälzkörperhandeln. Denn auf diese Weise ist es möglich, die Wälzkörper beim Auslösen, also beim Austritt aus den Senkungen weiterhin zu führen und somit bereits ein Wiedereinrücken der Kupplung, also den Wiedereintritt der Wälzkörper in die zugehörigen Senkungen durch bloßes Reversieren des Antriebs vorzubereiten. Überdies kann auf diese Weise durch Verbinden der Senkungen mit einer Kreisrille für die Wälzkörper eine Umlaufbahn geschaffen werden, in der sie im Auslösefall umlaufen können, wenn das abtreibende Kupplungsteil blockiert ist und das antreibende Kupplungsteil weiter läuft. Für diesen Fall ist es selbstverständlich zweckmäßig, die Kupplungskörper in einen Käfig so zu führen, daß auch beim Umlauf in der Kreisrille ihre Winkelabstände aufrecht bleiben, so daß das Wiedereinrücken keine Schwierigkeiten macht.

Der Grenzkraftschluß wird durch eine Vorspanneinrichtung, beispielsweise durch Tellerfedern einstellbar gemacht, die die beiden Kupplungshälften gegeneinander pressen und zwar je nach dem Anziehen einer Spannschraube mit einem kleineren oder größeren Anpreßdruck. So läßt sich über den Anpreßdruck der Grenzkraftschluß und damit das Auslösemoment nach Bedarf voreinstellen.

Die erfindungsgemäße Überlastungsschutzvorrichtung ist somit während des Normalbetriebs, bei dem es keine relativ zueinander beweglichen Teile gibt, schlupf- und verschleißfrei. Falls aber die Arbeitsmaschine blockiert wird, bleibt der arbeitsmaschinenseitige Teil der Kupplung, also die abtreibende Kupplungshälfte stehen. Die Schwungmasse des Antriebs, die als Energiespeicher dient und ein entsprechend großes Trägheitsmoment besitzt, dreht den antreibenden Kupplungsteil weiter. Dadurch werden gegen die Wirkung der Vorspanneinrichtung, also beispielsweise durch Zusammendrücken der Federn die Kupplungskörper aus ihrem Sitz ausgetrieben und auf exakt definierten Bahnen gehalten, so daß die als Rotationskörper ausgebildeten Kupplungskörper ein Weiterdrehen der Antriebsschwungmasse bis zum Stillstand erlauben, obwohl die Arbeitsmaschine blockiert ist.

Anschließend kann die Ursache für das Blockieren der Arbeitsmaschine problemlos beseitigt werden. Durch Reversieren des Antriebs werden die Kupplungskörper über ihre Führungsbahnen in ihren Sitz rückgeführt und durch die Druckkraft der Federn hier gehalten, wo sie bis zum erneuten Auftreten eines Störfalles auch verbleiben. Durch neuerliches Reversieren kann also der Antriebsstrang bis zur Arbeitsmaschine und damit deren Betrieb sogleich und einfach wieder aufgenommen werden.

Weitere Einzelheiten, Vorteile und Merkmale der Erfindung ergeben sich aus der folgenden Beschreibung der Figuren, auf die wegen der erfindungswesentlichen Offenbarung aller im folgenden nicht im einzelnen erläuterten Merkmale ausdrücklich verwiesen wird. Es zeigen
- Fig. 1: teilweise aufgerissen und im Schnitt eine Ausführung der erfindungsgemäßen Überlastschutzvorrichtung im eingerückten Zustand,
- Fig. 2: die Ausführungsform nach Fig. 1 im ausgerückten Zustand
- Fig. 3: die Ausbildung der Führungsbahnen in den einander zugekehrten Flächen der Kupplungsteile in Draufsicht.

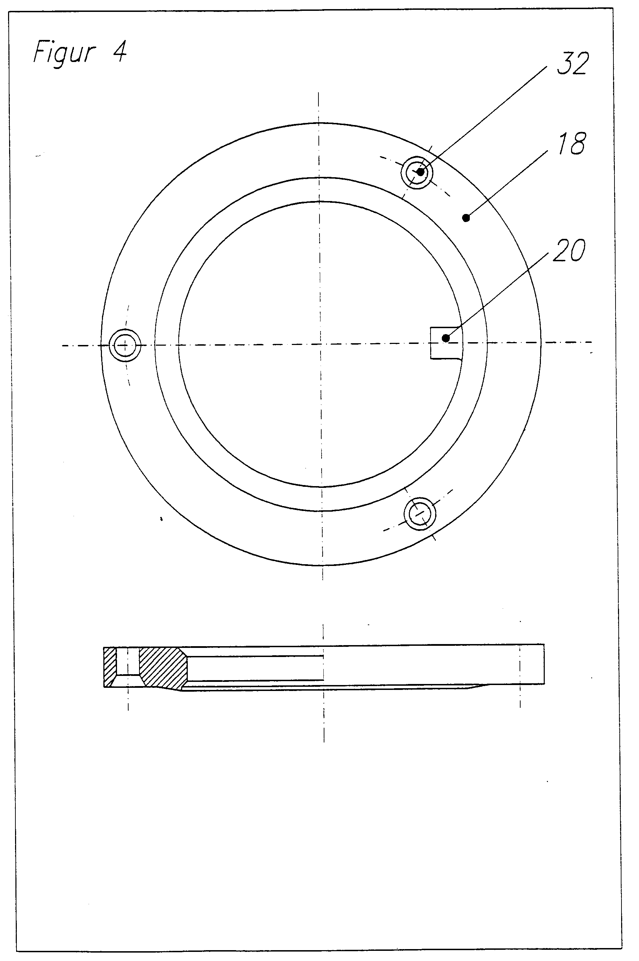

- Fig. 4: die Ausbildung des gegenüberliegenden Kupplungsteiles mit Wälzkörperaufnahme in Hauptansicht und Draufsicht und
- Fig. 5: die Führungsscheibe der Wälzkörper.

Von einem in der Figur nicht gezeigten Antriebsmotor wird eine Abtriebswelle 10 angetrieben. Auf den Umfang der Abtriebswelle ist eine Bronzelager 12 ausgebildet, auf den drehbar eine Riemenscheibe 14 angeordnet ist, über die der Antrieb der Arbeitsmaschine beispielsweise der beweglichen Brechbacke eines Doppelkniehebelbrechers oder Einschwingen-Backenbrechers erfolgt. Mit der Riemenscheibe 14 ist durch Schrauben eine abtreibende Kupplungsscheibe 16 fest verbunden. Andererseits ist mit der Abtriebswelle 10 eine antreibende Kupplungsscheibe 18 drehschlüssig verbunden. Da sich die antreibende Kupplungsscheibe 18 aber längs der Achse der Abtriebswelle 10 bewegen muß, erfolgt die drehschlüssige Verbindung durch Eingriff einer Nase 20 am Innenumfang der Kupplungsscheibe 18 in eine entsprechende Längsnut 22 am Außenumfang der Abtriebswelle 10. Es liegt auf der Hand, daß die Abtriebswelle 10, das Bronzelager 12, die Riemenscheibe 14 und die beiden Kupplungsscheiben 16 und 18 alle eine gemeinsame Achse haben.

Am Ende der Abtriebswelle 10 ist eine Druckplatte 24 mittels einer Einstellschraube 26 befestigt. Die Druckplatte 24 hat einen größeren Durchmesser als die Abtriebswelle 10, so daß zwischen sie und die von der Kupplungsscheibe 16 abliegende Seite der Kupplungsscheibe 18 eine Druckfeder 28 (hier ein Stapel Tellerfedern) eingesetzt werden kann. Es liegt auf der Hand, daß durch Lösen der Einstellschraube 26 der Druck der Druckfedern auf die Kupplungsscheibe 18 vermindert, durch Einschrauben jedoch erhöht werden kann.

Zur kraftschlüssigen Verbindung der beiden Kupplungsscheiben 16, 18 sind Wälzkörper 30 vorgesehen. Diese liegen in Senkungen 32 in der der Kupplungsscheibe 16 zugewandten Fläche der Kupplungsscheibe 18.

Die Wälzkörper 30 können verschiedene geometrische Formen aufweisen. Die einfachst mögliche Form der Wälzkörper ist jedoch die Kugel. Auch die Anzahl der zur Drehmomentübertragung eingesetzten Wälzkörper ist frei wählbar. Es ist jedoch vorteilhafter, drei Wälzkörper in Kugelform zu verwenden und mit gleichen Winkelabständen von 120° anzuordnen. Bei dieser Anordnung werden die Kugeln gleichmäßig belastet. Die Wälzkörper 30 können für große Belastungen aus Wälzlagerstahl hergestellt, vergütet und poliert sein.

Sinnvollerweise sind auch die Kupplungsscheiben 16, 18 zumindest an ihren einander zugewandten Oberflächen vergütet und nitrier- oder einsatzgehärtet.

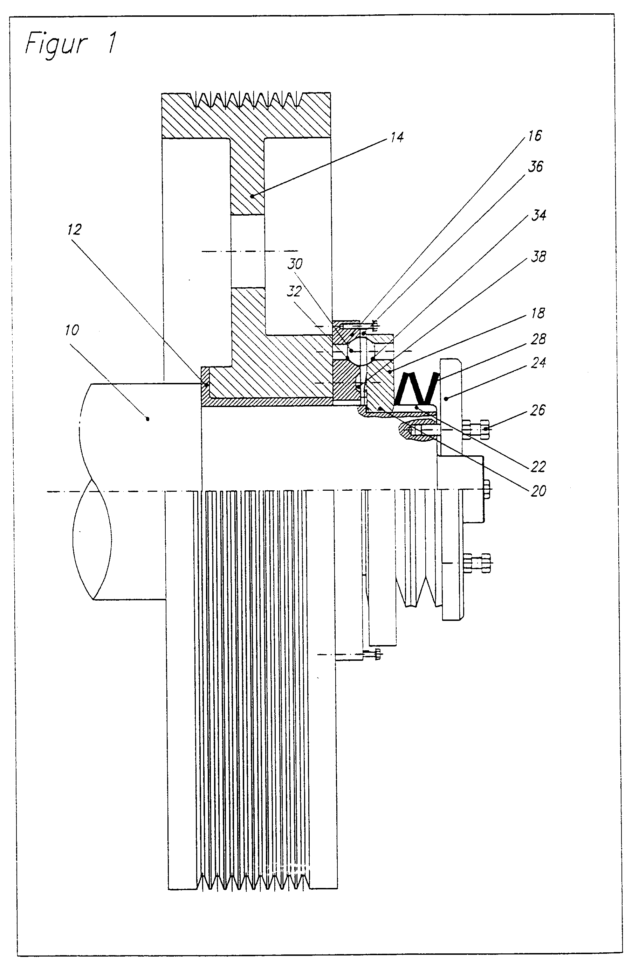

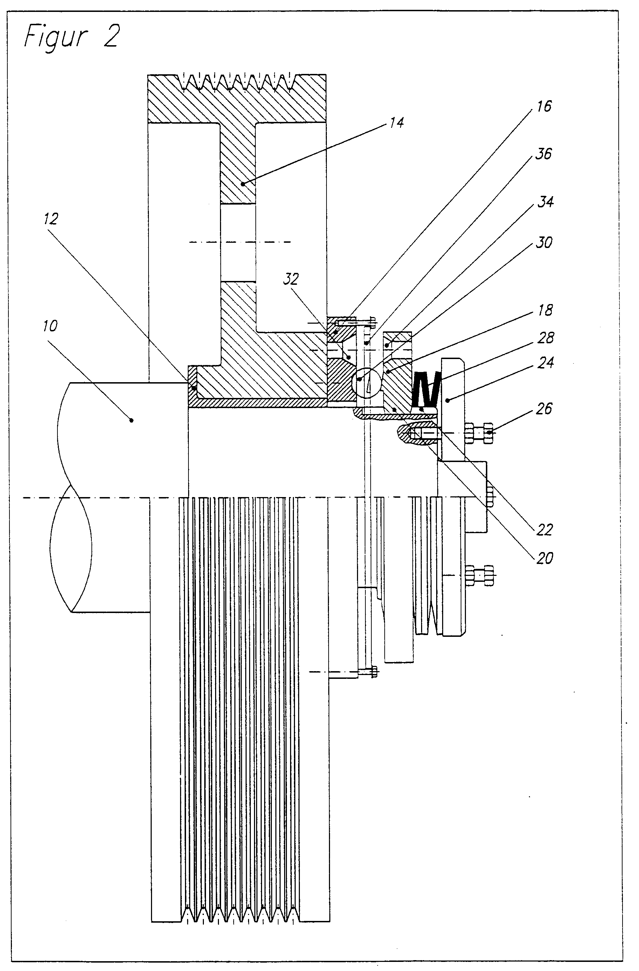

Es liegt auf der Hand, daß bei der Ausbildung der Wälzkörper 30 als Kugeln auch die Wälzkörpersitze als Senkungen 32 relativ einfach herstellbar sind. Die Figuren 1 und 2 lassen weiter erkennen, daß die Senkungen 32 in der antreibenden Kupplungsscheibe 18 eine solche Tiefe haben, daß die Wälzkörper 30 zur Hälfte ihres Durchmessers in die Senkungen 32 eintauchen. Entsprechend ist die Gegensenkung 34 in der Kupplungsscheibe 16 flacher ausgebildet. Dies deshalb, weil natürlich die allein durch die Wälzkörper 30 verbundenen Kupplungsscheiben 16 und 18 im übrigen einen gewissen Abstand haben und im Spalt zwischen beiden auch noch der Führungskäfig 36 für die Wälzkörper 30 untergebracht werden muß. Dieser Führungskäfig 36 zwingt den Wälzkörpern 30 gleiche Winkelabstände auf, erlaubt aber durch entsprechende Ausnehmungen eine gewisse Radialbewegung der Wälzkörper 30.

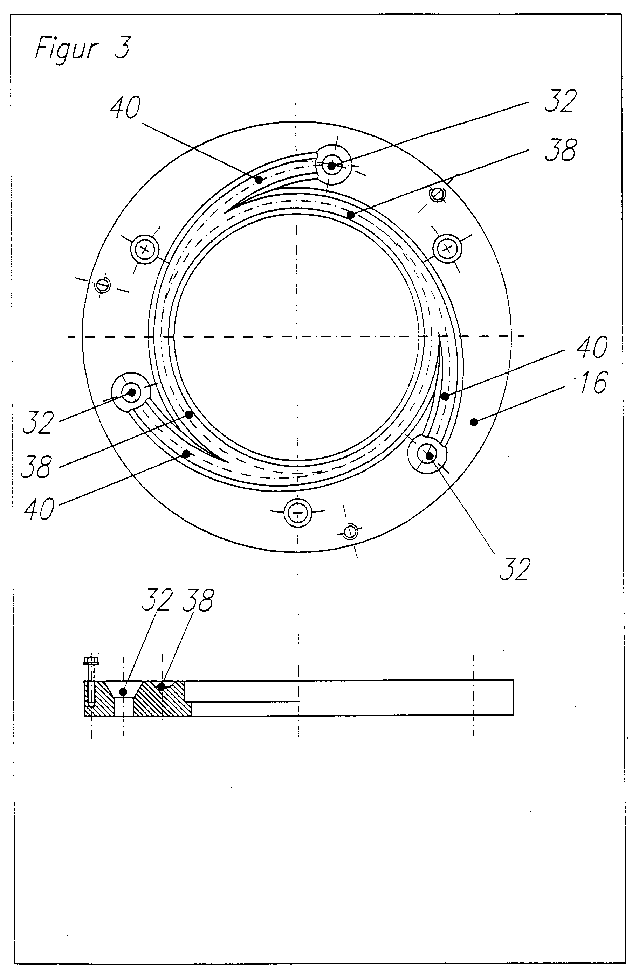

Fig. 3 zeigt, daß die Kupplungsscheibe 18 drei Senkungen 32 aufweist, was der bevorzugten Zahl von drei Wälzkörpern 30 entspricht. Man erkennt weiter, daß in der der Kupplungsscheibe 18 zugewandten Fläche der Kupplungsscheibe 16 eine kreisförmige Führungsrille 38 angeordnet ist. Im gezeigten Ausführungsbeispiel ist der Durchmesser der kreisförmigen Führungsrille 38 geringer als der Durchmesser des Kreises, auf dem die Senkungen 32 angeordnet sind. Die Führungsrille 38 ist mit den Senkungen 32 über in sie tangential einmündende Spiralbahnen 40 für die Wälzkörper 30 verbunden.

Die Überlastschutzvorrichtung arbeitet wie folgt:
Zunächst wird in der Grund- oder Einrückstellung nach Fig. 1 durch entsprechendes Einstellen des Federdrucks der Druckfeder 28 mit Hilfe der Einstellschraube 26 das Grenzdrehmoment oder die Grenzkraft des Kraftschlusses vorgewählt. Es liegt auf der Hand, daß die entsprechende Vorspanneinrichtung, die die Kupplungsscheibe 18 in Richtung der Kupplungsscheibe 16 beaufschlagt, auch durch andere Federn realisiert oder pneumatisch bzw. hydraulisch aufgebaut sein kann.

Wird nun durch Blockieren die Abtriebswelle 10 der Arbeitsmaschine schlagartig stillgesetzt, so wird der Grenzkraftschluß überschritten, und die Wälzkörper 30 verlassen ihre jeweiligen Senkungen 32 und werden über die Spiralbahnen 40 auf die kreisförmige Führungsrille 38 bewegt. Statt der innenliegenden kreisförmigen Führungsrille 38 ist natürlich auch eine außenliegende Führungsrille möglich. Auch die Verbindungsbahnen von den Senkungen zur Führungsrille müssen nicht, wie in Fig. 3 gezeigt, Spiralbahnen 40 sein. Es sind vielmehr auch andere kreis-, spiral- oder tangentialförmige Bahnen denkbar.

Beim Verlassen der Senkungen 32 und der Fortbewegung in den Spiralbahnen 40 und schließlich in der kreisförmigen Führungsrille 38 wälzen sich die Wälzkörper 30 ab. Es entsteht also zu keinem Zeitpunkt während des Aufrückvorganges der Kupplung Reibung, sondern eine saubere, definierte Abwälzbewegung. Entscheidend hierfür ist die konstruktive Gestaltung des Wälzkörpersitzes, also der Senkungen 32. Diese darf einen gewissen Grenzwinkel nicht überschreiten, um ein sauberes, kontrollierbares und gleichmäßiges Auslösen aller drei Wälzkörper 30 zu garantieren und kurzfristig zu große Pressungen während der ersten Abwälzaugenblicke zu vermeiden.

Auch die Querschnittsform der Spiralbahnen 40 und der kreisförmigen Führungsrille 38 trägt erheblich zu einem guten Abwälzvorgang bei. Durch geeignete Formgebung kann später auch die Rückstellung bei Reversieren positiv beeinflußt werden. Es ist also die Querschnittsform der Führungsbahnen nach den Führungseigenschaften zu wählen, wobei auf Minimierung des Verschleißes, aber natürlich auch auf die Erfordernisse der fertigungstechnischen Realisierung zu achten ist. Durch entsprechende Form lassen sich auch die bei einfach bauenden Zahnkupplungen gefürchteten Rattereffekte vermeiden.

Es liegt auf der Hand, daß bei dem beschriebenen Auslösevorgang der Abstand der Kupplungsscheibe, 16,18 voneinander zunimmt, also die Kupplungsscheibe 18 in der Längsnut 22 von der Kupplungsscheibe 16 unter Komprimierung der Druckfeder 28 abgerückt werden muß, wie das in Fig. 2 klar erkannt werden kann.

Es liegt weiter auf der Hand, daß nach dem Auslösen der Überlastsicherung, also nach dem Trennen der Kupplung der abtreibende Teil langsamer drehen oder sogar blitzartig stehenbleiben wird. So ergibt sich eine Differenzdrehzahl zwischen der Drehzahl der Abtriebswelle 10 und der Drehzahl der Riemenscheibe 14. Die Relativdrehung dieser beiden Teile zueinander ist aber durch das zwischengeschaltete Bronzelager 12 ohne weiteres möglich.

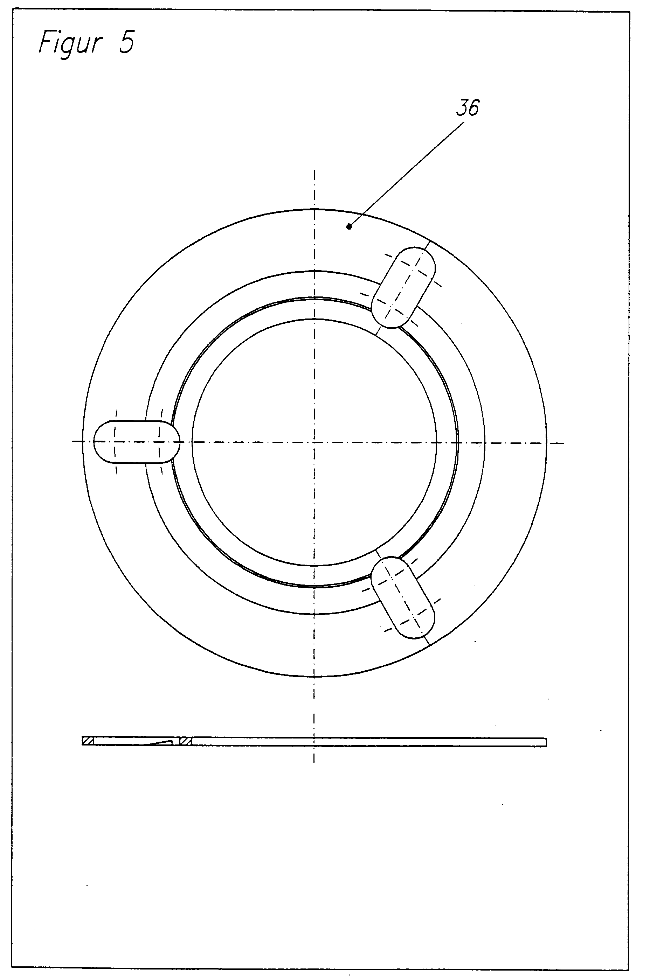

Ist die Kupplung einmal ausgerückt, so wirken die beiden Kupplungshälften nun wie Außenringe eines Axialwälzlagers. Die Kupplung trennt also vollständig kraft- und formschlußfrei. Auch in ausgerücktem Zustand werden die Wälzkörper während des Abwälzvorganges durch den Führungskäfig 36 auf gleichmäßiger Distanz gehalten. Der Führungskäfig 36 erfüllt also eine ähnliche Funktion wie der Lagerkäfig eines Kugellagers, wie in Fig. 5 dargestellt.

Ist die Ursache für die Blockierung beseitigt, so muß die Kupplung wieder eingerückt werden. Hierfür müssen die Wälzkörper 30 die kreisförmige Führungsrille 38 verlassen und ihren Platz in den zugehörigen Senkungen 32 wieder einnehmen.

Dafür genügt es, den Antrieb zu reversieren. Wird den Wälzkörpern dabei eine Tendenz zum Verlassen der Kreisbahn in der Führungsrille 38 durch entsprechende Ausführung der Querschnitte oder auch durch die Fliehkraft erteilt, so kehren die Wälzkörper 30 bei Reversieren des Antriebs tatsächlich von selbst auf die Spiralbahnen 40 und in die Senkungen 32 zurück. Dadurch ist die Kupplung wieder eingerückt und durch neuerliches Reversieren kann ohne weiteren Aufenthalt die Arbeitsmaschine wieder in Betrieb genommen werden.

### Bezugszeichen

- 10: Abtriebswelle
- 12: Bronzelager
- 14: Riemenscheibe
- 16: Kupplungsscheibe (abtreibend)
- 18: Kupplungsscheibe (antreibend)
- 20: Nase
- 22: Längsnut
- 24: Druckplatte
- 26: Einstellschraube
- 28: Druckfeder
- 30: Wälzkörper
- 32: Senkungen
- 34: Gegensenkung
- 36: Führungskäfig
- 38: Führungsrille
- 40: Spiralbahnen

## Patentansprüche

1. Mechanische Überlastschutzvorrichtung für Maschinen mit einem Antriebsmotor, einer von diesem angetriebenen Arbeitsmaschine, und einer in den Arbeitsstrang eingeschalteten Überlastsicherung, die bei Überlastung der Arbeitsmaschine den Antriebsstrang zum Antriebsmotor unterbricht,
dadurch gekennzeichnet,
daß die Überlastsicherung eine Kupplung aus einem antreibenden und einem abtreibenden Kupplungsteil ist,
daß die Kupplungsteile relativ zueinander drehbar und durch eine Anzahl von Kupplungskörpern miteinander kraftschlüssig gekuppelt sind,
und daß die Kupplungskörper unter einer die Grenzkraft des Kraftschlusses bestimmenden Federkraft in Kupplungsstellung gehalten und bei Überschreiten der Grenzkraft (z.B. bei Blockieren des abtreibenden Kupplungsteils) in eine den Kraftschluß aufhebende Ausrückstellung überführbar sind.

2. Vorrichtung nach Anspruch 1, dadurch gekennzeichnet, daß drei oder mehr Kupplungskörper vorgesehen sind.

3. Vorrichtung nach Anspruch 1 oder 2, dadurch gekennzeichnet, daß die Kupplungskörper Wälzkörper sind.

4. Vorrichtung nach Anspruch 3, dadurch gekennzeichnet, daß die Kupplungskörper Kugeln sind.

5. Vorrichtung nach einem der Ansprüche 1-4, dadurch gekennzeichnet, daß der antreibende und der abtreibende Kupplungsteil ineinander zugewandten Flächen Senkungen für die Aufnahme der so den Kraftschluß herstellenden Kupplungskörper haben.

6. Vorrichtung nach Anspruch 5, dadurch gekennzeichnet, daß an die Senkungen Führungsbahnen zur Führung der Kupplungskörper nach Überwinden des Kraftschlusses anschließen.

7. Vorrichtung nach Anspruch 6, dadurch gekennzeichnet, daß die Führungsbahnen in den antreibenden und/oder den abtreibenden Kupplungsteil eingefräste Führungsrillen sind.

8. Vorrichtung nach Anspruch 6 oder 7, dadurch gekennzeichnet daß die Führungsbahnen eine das Wiedereinrücken der Kupplung durch Reversieren des Antriebs ermöglichende Gestalt haben.

9. Vorrichtung nach Anspruch 7 oder 8, dadurch gekennzeichnet, daß die Führungsbahnen aus einer sämtlichen Kupplungskörpern gemeinsamen Kreisrille und in diese tangential einmündenden Spiralbahnen bestehen, an deren anderem Ende die Senkungen angeordnet sind.

10. Vorrichtung nach einem der Ansprüche 1 bis 9, dadurch gekennzeichnet, daß die Kupplungskörper in einem ihnen in jedem Betriebszustand gleiche Winkelabstände aufzwingenden Führungskäfig geführt sind.

11. Vorrichtung nach einem der Ansprüche 1 bis 10, dadurch gekennzeichnet, daß der antreibende und der abtreibende Kupplungsteil einander gegenüberliegende Kupplungsscheiben sind, die durch eine Vorspanneinrichtung im Sinne einer Verminderung des zwischen ihnen liegenden Kupplungsspaltes beaufschlagt sind.

12. Vorrichtung nach Anspruch 11, dadurch gekennzeichnet, daß das eine Kupplungsteil drehschlüssig, aber axial verschieblich mit einer Abtriebswelle verbunden und von einer Vorspanneinrichtung zur Einstellung der Grenzkraft des Kraftschlusses in Richtung des anderen Kupplungsteils beaufschlagt ist, das drehbar auf derselben Abtriebswelle gelagert ist.
